# EUROPÄISCHE PATENTSCHRIFT

(11) **EP 1 169 513 B1**
(45) Veröffentlichungstag und Bekanntmachung des Hinweises auf die Patenterteilung: **08.09.2004**
(21) Anmeldenummer: 00922610.1
(22) Anmeldetag: 05.04.2000
(51) Int. Cl.: D21F 7/08

(54) **TRANSFERBAND**
TRANSFER STRIP
BANDE DE TRANSFERT

(30) Priorität: 08.04.1999 DE 19915891
(43) Veröffentlichungstag der Anmeldung: 09.01.2002
(73) Patentinhaber: Huyck Austria Ges. m.b.H., 2640 Glognitz (AT)
(72) Erfinder: GSTREIN, Hippolit, A-2640 Gloggnitz (AT)
(74) Vertreter: Popp, Eugen, Dr.
(86) Internationale Anmeldenummer: PCT/EP2000/003024
(87) Internationale Veröffentlichungsnummer: WO 2000/061864

(56) Entgegenhaltungen:
- EP-A- 0 741 204
- DE-U- 29 706 427

## Beschreibung

Die Erfindung betrifft ein Transferband einer Naßpresse mit verlängertem Pressenspalt zur Trocknung einer Papierbahn.

In Naßpressen von Papiermaschinen wird ein wesentlicher Teil der in der frischen Papierbahn enthaltenen Flüssigkeit zwischen Druckwalzen, die einen Pressenspalt bilden, bzw. - bei einer sogenannten Schuhpresse - zwischen einem Preßschuh und einer Gegenwalze ausgepreßt. Die Papierbahn wird üblicherweise mittels eines umlaufenden Filzbandes durch den Pressenspalt geführt, in dem das Filzband die Flüssigkeit aus der Papierbahn aufnimmt und abführt.

Bei einer sogenannten Tandem-Schuhpresse erfolgt die Entwässerung in der Regel zwischen zwei Preßfilzen. Eine neue Entwicklung geht dahin, einen dieser Preßfilze durch ein Transferband zu ersetzen, wodurch die Entwässerungsleistung im Preßspalt (Nip) verbessert und die Lücke zwischen der letzten Naßpresse und dem trockenen Abschnitt der Papiermaschine (der sogenannten "Trockenpartie") geschlossen werden kann. Ein Transferband muß eine gleichmäßige Druckübertragung innerhalb des Pressenspaltes gewährleisten, eine gute Blattabgabe zeigen und darf nicht zu einer wesentlichen Rückbefeuchtung der Papierbahn beim Auslaufen aus dem Pressenspalt führen. Die in der Praxis eingesetzten Transferbänder bestehen im wesentlichen aus Polyurethan und haben eine glatte, in der Regel geschliffene, Oberfläche. Es hat sich herausgestellt, daß die Papierabgabeeigenschaften dieser Polyurethan-Transferbänder nicht völlig zufriedenstellend sind und die auf ihnen durch den Pressenspalt geführte Papierbahn zudem ungleich glatte Oberflächen ("Zweiseitigkeit") aufweist. Die erwähnte Zweiseitigkeit ist bei graphischen Papieren als Qualitätsmangel anzusehen.

Ein Transferband einer Naßpresse der vorstehend beschriebenen Gattung mit einer gewebten Trägerbahn, einer auf die Trägerbahn filzartig aufgenadelten, schmelzbare Fasern aufweisenden, im wesentlichen polymeren Faserstruktur, die auf thermomechanischem Wege in eine wasserundurchlässige Polymerschicht umgeformt ist, ist in der DE 297 06 427 U1 offenbart.

Der Erfindung liegt daher die Aufgabe zugrunde, ein Transferband mit verbesserten Gebrauchseigenschaften anzugeben, das insbesondere Vorteile hinsichtlich der Blattabgabe und der Oberflächentextur der erzeugten Papierbahn bietet.

Diese Aufgabe wird durch ein Transferband mit den Merkmalen des Anspruchs 1 gelöst.

Vorteilhafte Ausgestaltungen finden sich in den abhängigen Ansprüchen. Anspruch 17 definiert eine Naßpresse ausgerüstet mit einem entsprechenden Transferband.

Die Erfindung schließt den wesentlichen Gedanken ein, das bisher übliche Transferband mit glatter, der Papierbahn zugewandter Oberfläche durch ein solches mit einer faserstrukturierten Oberfläche zu ersetzen, die der Oberflächentextur des auf der anderen Seite der Papierbahn liegenden Preßfilzes weitgehend entspricht. Hierdurch wird die Oberflächentextur beider Oberflächen der Papierbahn weitgehend angeglichen und die nachteilige Zweiseitigkeit im wesentlichen beseitigt.

Sie schließt weiter den Gedanken ein, diese filzartige, faserige Oberflächentextur des Transferbandes durch eine zwei- oder mehrkomponentige Beschichtung eines Trägerbandes zu realisieren, welches insbesondere gewebt oder gewirkt ist.

Mit diesem ist diese mehrkomponentige Beschichtung vernadelt und auf thermo-mechanischem Wege, d. h. durch ein geeignet gewähltes Druck- und Temperaturbeaufschlagungsregime so fest verbunden, daß der Verbund den hohen mechanischen Beanspruchungen gewachsen ist, denen ein Transferband im Naßpressenabschnitt einer Papiermaschine unterliegt. Die erwähnte zwei- oder mehrkomponentige Beschichtung des Trägers, die die. faserstrukturierte Oberfläche liefert, umfaßt eine relativ dicke, wasserundurchlässige oder nur geringfügig wasserdurchlässige Polymerschicht, welche fest mit dem Träger verbunden ist, sowie eine dünne faserige Oberflächenschicht aus nicht-schmelzenden (bzw. bei höherer Temperatur schmelzenden) und nicht-klebenden Fasern, die ihrerseits fest mit der Polymerschicht verbunden ist.

Vorzugsweise ist das Transferband beidseitig mit einer Polymerschicht abgedichtet, um das "Mitschleppen" von Wasser an der Unterseite des Bandes zu vermeiden.

Vorzugsweise werden für die Polymerschicht niedrig schmelzende Polyolefine, Polyamide, Polyester, Polyacrylate oder Polyvinyle eingesetzt.

Die niedrig schmelzende Polymerschicht wird nach dem Nadelprozeß oder während des Fixierprozesses durch Verschmelzen der entsprechenden Fasern bei Temperaturen im Bereich zwischen 100°C und 220°C, vorzugsweise zwischen 120°C und 150°C, gebildet. Durch Anwendung von Drücken im Bereich zwischen 4,9 bar [5 kg/cm²] und 68,6 bar [70 kg/cm²] kann die Erweichungstemperatur der Polymere reduziert und die Verdichtung des Bandes erhöht werden.

Die Polymerschicht wird dadurch gebildet, daß schmelzbare bzw. schmelz-klebende Komponenten innerhalb einer auf das Trägerband aufgebrachten filzähnlichen Struktur unter Druck verschmolzen werden. Diese Art der Bildung der Polymerschicht sichert eine vorbestimmte Kompressibilität, die wesentlich zu einer gleichmäßigen Druckübertragung im Pressenspalt und ausgezeichneten Abnahmeeigenschaften beim Übergang der Papierbahn in die Trokkenpartie beiträgt. Die geringe Dicke der auf der wasserundurchlässigen Polymerschicht angeordneten faserigen Oberflächenschicht gewährleistet ausgezeichnete Abgabeeigenschaften beim Übergang der Papierbahn in die Trockenpartie und eine minimale Rückbefeuchtung, wodurch ein gravierender Nachteil von Preßfilzen beim vorgeschlagenen Transferband beseitigt wird.

Das Trägerband hat insbesondere einen mehrlagigen bzw. laminierten Aufbau aus feinen Zwirnen in allen Lagen, sowohl in Längs- als auch in Querrichtung. Bei den feinen Zwirnen handelt es sich vorzugsweise um Monofile in einer Drahtstärke zwischen 0,1 und 0,3 mm, welche auch mehrfach verzwirnt sein können, um Filamentzwirne oder Mischzwirne aus Monofilen und Multifilamenten. Bei Verwendung eines Trägergewebes mit einer Naht kommen hierfür gröbere Monofile mit einer Drahtstärke zwischen 0,3 und 0,8 mm zum Einsatz.

Auf der der Polymerschicht abgewandten Seite des Trägerbandes ist in einer vorteilhaften Ausführung eine Vliesschicht vorgesehen, die mit dem Träger fest verbunden ist und die Druckübertragungseigenschaften im Pressenspalt weiter verbessert. Bei Einsatz mehrerer Gewebelagen für die Trägerbahn sind diese vorzugsweise miteinander vernadelt, wobei insbesondere die Faserstruktur zur Ausbildung der Polymerschicht zugleich mit der Verbindung der Gewebelagen erzeugt wird.

Der Bereich des Transferbandes, der nach der thermo-mechanischen Appretur die Polymerschicht bildet, ist insbesondere aus Fasern aufgebaut, deren Anteil an schmelzenden oder schmelz-klebenden Fasern mindestens 10 % beträgt, jedoch bevorzugt im Bereich von 25 - 100 % liegt. Durch in diese (aufgenadelte) Faserstruktur zusätzlich eingeschmolzene Längs- und/oder Querfäden ist die Polymerschicht in einer besonders haltbaren Ausführung zusätzlich verstärkt.

Die Dicke der Polymerschicht (bzw. beider Polymerschichten zusammen) liegt im Bereich zwischen 20 und 90%, insbesondere zwischen 60 und 90%, der Gesamtdicke des Transferbandes. Hingegen liegt die mittlere Dicke der faserigen Oberflächenschicht lediglich im Bereich zwischen 1 und 10% der Gesamtdicke des Transferbandes. Die faserige Oberflächenschicht ist zweckmäßigerweise im wesentlichen aus hochtemperaturbeständigen abriebfesten Fasern gebildet, wodurch eine lange Lebensdauer dieser Oberflächenschicht und damit des Transferbandes insgesamt bei konstanten Texturierungseigenschaften bezüglich der Papierbahn gesichert wird. Die faserige Oberflächenschicht ist vorzugsweise aus Fasermaterial mit einem Schmelzpunkt, der 50°-100°C höher als der Schmelzpunkt der Polymerschicht liegt - etwa aus Polyester-, Polyamid- oder Polycarbonatfasern - und/oder mit nichtschmelzenden Fasern, wie etwa PAC-, Aramid-, Teflon- oder Kohlefasern, gebildet.

In Anbetracht der hohen Steifigkeit eines Transferbandes ist eine Ausführung als genahtetes Band bzw. als Nahtfilz-Gewebe, welches beim Einziehen vollkommen verschlossen wird, besonders bevorzugt.

Zur Ausbildung der Trägerbahn sind insbesondere Polyamid-, Polyester-, Aramid- sowie weitere Fasern mit hohem Dehnungs-widerstand und großer Festigkeit und Biegsamkeit geeignet. Als aufgenadelte Fasern sowie für den Aufbau des rückseitigen Vlieses können Polyamid-, Polyester-, Polypropylen- und PVC-Fasern sowie ausgewählte Copolymere aus diesen, aber auch andere leicht verfügbare Polymerfasern, Verwendung finden. Die genannten Fasern haben thermoplastische Eigenschaften und sind daher zur Bildung der dichten, wasserundurchlässigen Polymerschicht unter der der Papierbahn zugewandten Oberfläche des Transferbandes geeignet. Die genaue Einstellung der gewünschten Eigenschaften erfolgt in an sich bekannter Weise durch Auswahl von Basis-Polymeren mit geeigneter Struktur, insbesondere Kettenlänge und Vernetzungsgrad, sowie gegebenenfalls durch Zugabe von Weichmachern und anderen Zusatzstoffen.

Bei Bildung der Oberflächenschicht aus thermoplastischen Kunststofffasern ist bei der Herstellung des Transferbandes zu beachten, daß die thermo-mechanische Behandlung so auf die physikochemischen Eigenschaften des Oberflächen-Fasermaterials abgestimmt ist, daß an der Oberfläche kein Verschmelzen (mit damit einhergehendem Texturverlust) der Fasern stattfindet.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren.

Von diesen zeigen
- Fig. 1: eine schematische (nicht maßstäbliche) Querschnittsdarstellung eines Transferbandes gemäß einer ersten Ausführungsform,
- Fig. 2: eine schematische Querschnittsdarstellung einer zweiten Ausführungsform,
- Fig. 3: eine schematische Querschnittsdarstellung einer dritten Ausführungsform,
- Fig. 4: einer vierten Ausführungsform, und
- Fig. 5: eine Prinzipskizze einer Naßpresse, in der das erfindungsgemäße Transferband eingesetzt wird.

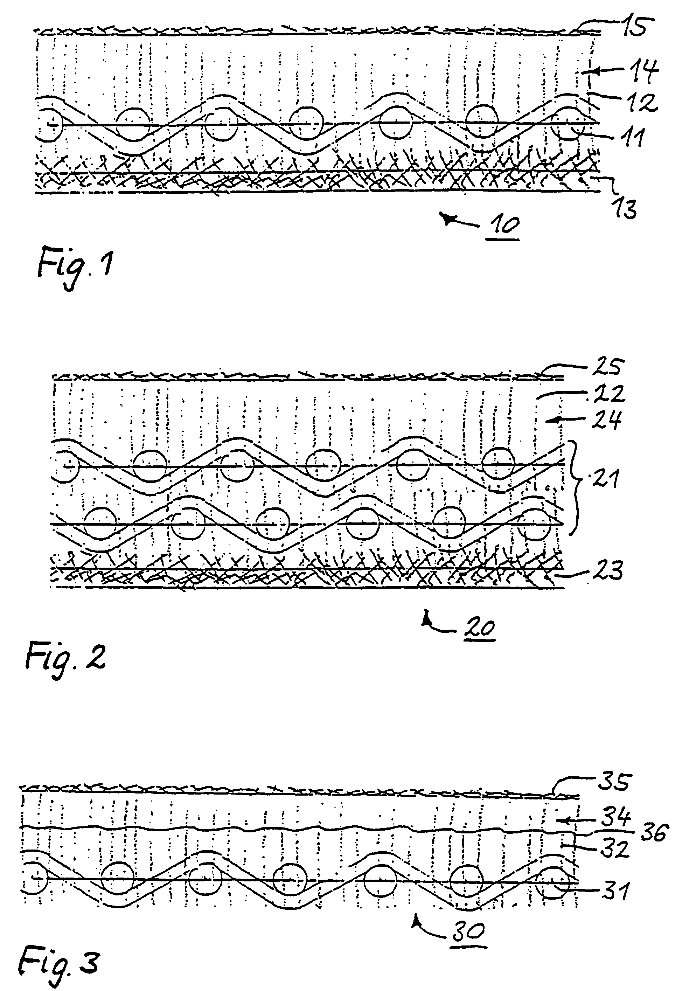

Fig. 1 zeigt den Aufbau eines Transferbandes 10 mit einlagigem Trägergewebe 11 im Querschnitt.

Auf einer Oberfläche des Trägergewebes 11 ist eine polymere Faserstruktur 12 und auf der dieser abgewandten Oberfläche ein kurzfaseriges Vlies 13 aufgebracht. Die polymere Faserstruktur 12 ist auf das Gewebe 11 aufgenadelt und auf solche Weise einer Druck- und Wärmebehandlung unterzogen, daß sie (was in der Figur nicht zu erkennen ist) unter Bildung von Hohlräumen unterschiedlicher Größe und Gestalt zu einer weitgehend wasserundurchlässigen und kompressiblen Polymerschicht 14 verschmolzen wird. Die Wasserdurchlässigkeit soll im Bereich von 0 bis 50 l/dm².min, bevorzugt unterhalb von 30 l/dm².min, unter den im Pressenspalt üblichen Drücken liegen. Auf der polymeren Faserstruktur 12 bzw. der daraus gebildeten Polymerschicht 14 ist eine dünne faserige bzw. filzartige Oberflächenschicht (Beflokkung) 15 aus hochtemperatur-beständigen und abriebfesten Fasern angeordnet.

Das Trägergewebe 11 ist aus hoch zugfesten und dennoch relativ feinen Zwirnen, etwa aus Polyamid oder p-Aramid, gefertigt und sichert eine Zugfestigkeit und Laufeigenschaften des Transferbandes, die denen herkömmlicher Polyurethanbänder annähernd gleichwertig sind. Die thermo-mechanische Behandlung der aufgenadelten Faserstruktur 12 mit einem Anteil von über 50% schmelzklebender Fasern sichert die Ausbildung einer etwa 60% der Banddicke ausmachenden polymeren Wasserbarriere-Schicht mit vorbestimmter Kompressibilität, die mehrere wichtige Funktionen zugleich erfüllt: Zum einen wirkt sie im Pressenspalt als Druckverteilungsmedium und sichert vorteilhafte Druckübertragungseigenschaften von der Walze auf die Papierbahn. Weiterhin bewirkt sie, daß die Feuchtigkeit der Papierbahn nur begrenzt in die Tiefe des Transferbandes eindringen kann und daß daher nur eine minimale Rückbefeuchtung der Papierbahn erfolgt. Schließlich überlagert sie der faserigen Primärtextur der Beflockung 15 eine gröbere, aber ebenfalls filzartig ungeordnete und druckstabile Sekundärtextur und sichert damit - zusammen mit der Oberflächenschicht - , daß die mittels des vorgeschlagenen Transferbandes getrocknete Papierbahn praktisch keine Zweiseitigkeit aufweist.

Die in Fig. 2 gezeigte weitere Ausführung eines Transferbandes 20 entspricht im Aufbau weitgehend der in Fig. 1 gezeigten und oben erläuterten ersten Ausführung, so daß die Bezugsziffern an die in Fig. 1 verwendeten angelehnt wurden und die mit zueinander korrespondierenden Bezugsziffern bezeichneten Komponenten hier nicht nochmals erläutert werden.

Der wesentliche Unterschied dieser zweiten Ausführung gegenüber der ersten besteht im Vorsehen eines zweilagigen Trägergewebes 21, mit dessen einer Gewebelage ein Vlies 23 verbunden ist, während durch beide Gewebelagen eine polymere Faserstruktur 22 genadelt ist, welche zusätzlich durch Druck-Aufschmelzen an der oberen Gewebelage des Träger-gewebes 21 fixiert ist. Die durch die thermo-mechanische Behandlung ausgebildete Polymerschicht 24 unterhalb der Bandoberfläche, die auch hier durch eine Beflockung 25 gebildet ist, erstreckt sich hier über einen etwas geringeren Anteil der Gesamtdicke des Transferbandes, da das Trägergewebe 21 - dessen Zweilagigkeit der Erzielung einer höheren Steifigkeit und Zugfestigkeit dient - seinerseits einen größeren Anteil der gesamten Banddicke beansprucht.

In dieser Ausführung sind die beiden Gewebelagen des Trägergewebes 21. im wesentlichen durch die aufgenadelte polymere Faserstruktur 22 mit einer gewissen elastischen Verschieblichkeit in Bandlaufrichtung miteinander verbunden, was eine hohe Langzeitstabilität der laminierten Gewebestruktur sichert. Die übrigen Vorteile entsprechen den oben in Bezug auf die Ausführung nach Fig. 1 genannten.

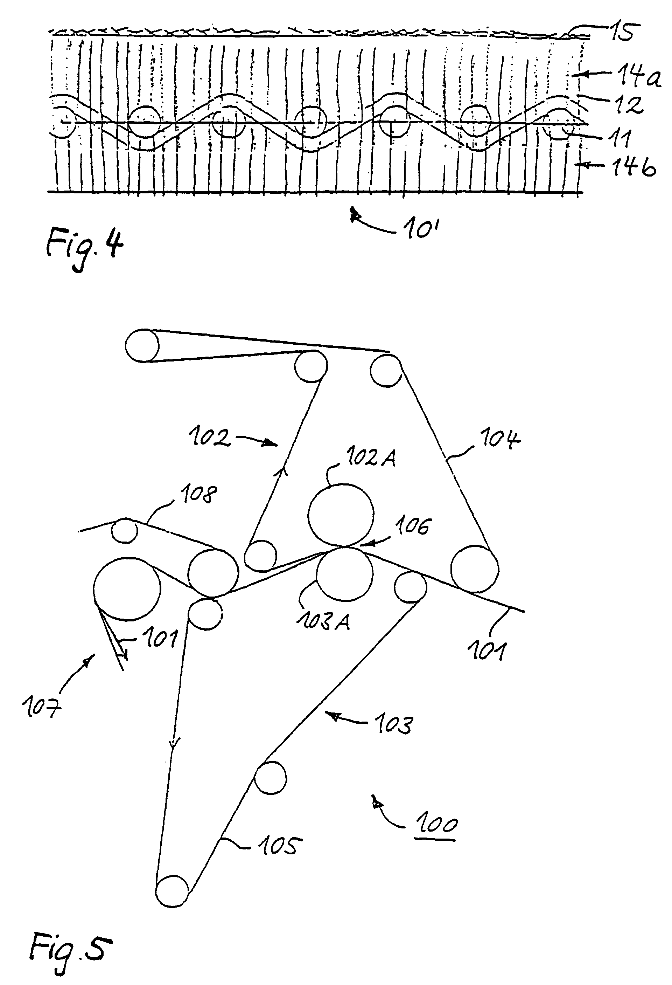

Fig. 3 zeigt eine gegenüber Fig. 1 vereinfachte Ausführung, bei der wieder übereinstimmende Komponenten mit an Fig. 1 angelehnten Bezugsziffern bezeichnet sind. Der wesentliche Unterschied zur Ausführung nach Fig. 1 besteht im Fortfall der rückseitigen Vliesbeschichtung, der dazu führt, daß das Transferband 30 mit dem Gewebeträger 31 direkt auf den Walzen der Naßpresse läuft (vgl. dazu Fig. 4 und die Beschreibung weiter unten).

Von allen hier beschriebenen Ausführungen ist das Transferband 30 das biegsamste und in seinem Aufbau einfachste und daher - bei Einsatz gleichartiger Fasermaterialien - auch kostengünstigste. Der Entfall der Vliesschicht, die bei den beiden anderen Ausführungen das Trägergewebe vor Abrieb schützt, erfordert hier aber die Auswahl eines hinreichend abriebfesten Materials für das Trägergewebe, etwa von Polyamid. Als Materialien für die polymere Faserstruktur 32, aus der die Polymerschicht 34 gebildet wird, sowie die Oberflächenbeschichtung 35 kommen die weiter oben erwähnten Materialien in Frage. Die Oberflächenschicht 35 ist im übrigen - wie bei den übrigen Ausführungen auch - insbesondere ihrerseits mit der Polymerschicht 34 vernadelt, wobei deren thermo-mechanische Behandlung für eine sehr verschleißfeste Fixierung der Oberflächenschicht sorgt. Bei dem in Fig. 3 gezeigten Transferband 30 ist in die Polymerschicht 34 eine Anordnung aus Längsfäden 36 zur Erhöhung der Zugfestigkeit und zur Optimierung der Verteilung der Zugspannungen über die Bandhöhe vorgesehen.

Fig. 4 zeigt ein gegenüber Fig. 1 modifiziertes Transferband 10', bei dem eine polymere Faserstruktur 12 sich beidseits des Trägergewebes 11 erstreckt und aus dieser eine oberhalb des Trägergewebes 11 liegende erste Polymerschicht 14a und eine unterhalb des Trägergewebes liegende zweite Polymerschicht 14b gebildet ist. Diese Ausführung ist insofern vorteilhaft, als hier das Transferband beidseitig mit einer Polymerschicht abgedichtet ist und die Mitführung von Wasser an der Bandunterseite so verhindert wird.

Fig. 5 ist eine Prinzipskizze der Funktion einer Naßpresse 100, die das erfindungsgemäße Transferband enthält. Fig. 4 ist eine Prinzipskizze einer Naßpresse 100 als Bestandteil einer (nicht insgesamt dargestellten) Papiermaschine. Eine Papierbahn 101 läuft zwischen einer ersten (im Bild der oberen) Walzenanordnung 102 und einer zweiten (im Bild der unteren) Walzenanordnung 103 hindurch, von denen die erste Walzenanordnung 102 einen Preßfilz 104 und die zweite Walzenanordnung 103 ein Transferband 105 transportiert, das beispielsweise einen der oben beschriebenen Aufbauten hat. Zwischen den Preßwalzen 102A der ersten Walzengruppe und 103A der zweiten Walzengruppe ist ein Pressenspalt 106 bestimmt, in dem die Papierbahn 101 zwischen dem Preßfilz 104 und dem Transferband 105 im wesentlichen entwässert wird. Die Papierbahn 101 läuft dann in eine Trockenpartie 107 (von der in der Figur nur ein Teil gezeigt ist), wo sie von einem Trocknerband 108 geführt wird. Der Preßfilz 104 - nach Entwässerung - und das Transferband 105 laufen zum Eingang der Naßpresse 100 zurück.

Die Ausführung der Erfindung ist nicht auf die oben beschriebenen Ausführungsbeispiele beschränkt, sondern ebenso in einer Vielzahl von Abwandlungen möglich. Insbesondere ist der mehrkomponentige Aufbau des Transferbandes in Abhängigkeit von den konkreten Einsatzbedingungen, etwa der herzustellenden Papierqualität und den Betriebsparametern der Naßpresse, vielfältig variierbar. Die einsetzbaren Materialien sind nicht auf die erwähnten Kunststoffe beschränkt, sondern an deren Stelle sind auch andere Fasermaterialien mit dem Fachmann bekanntermaßen geeigneten Eigenschaften einsetzbar.

### Bezugszeichenliste

- 10, 10'; 20; 30: Transferband
- 11; 21; 31: Trägergewebe
- 12; 22; 32: polymere Faserstruktur
- 13; 23: Vlies
- 14, 14a, 14b; 24; 34: Polymerschicht
- 15; 25; 35: Oberflächenschicht
- 36: Verstärkungsfaden
- 100: Naßpresse
- 101: Papierbahn
- 102: erste Walzengruppe
- 102A: Preßwalze
- 103: zweite Walzengruppe
- 103A: Preßwalze
- 104: Preßfilz
- 105: Transferband
- 106: Pressenspalt
- 107: Trockenpartie
- 108: Transportband

## Patentansprüche

1. Transferband (10; 10'; 20; 30) einer Naßpresse (100), insbesondere mit verlängertem Pressenspalt (106) zur Trocknung einer Papierbahn (101), mit
- einer, insbesondere gewebten oder gewirkten, Trägerbahn (11; 21; 31),
- einer auf die Trägerbahn filzartig aufgenadelten, schmelzbare Fasern aufweisenden, im wesentlichen polymeren Faserstruktur (12; 22; 32), die auf thermo-mechanischem Wege in eine wasserundurchlässige Polymerschicht (14; 14a, 14b; 24; 34) umgeformt ist,
**gekennzeichnet durch**
- eine auf der Polymerschicht angeordnete, faserige Oberflächenschicht (15; 25; 35) mit filzartiger bzw. faserstrukturierter Textur, insbesondere aus aufgenadelten, nicht-schmelzenden und nicht-klebenden Fasern.

2. Transferband nach Anspruch 1,
**dadurch gekennzeichnet,**
**daß** die Trägerbahn (21) einen mehrlagigen oder laminierten Aufbau hat.

3. Transferband nach Anspruch 1 oder 2,
**dadurch gekennzeichnet,**
**daß** auf der der Polymerschicht (14; 24) abgewandten Seite der Trägerbahn (11; 21) eine Vliesschicht (15; 25) vorgesehen ist.

4. Transferband nach Anspruch 1 oder 2,
**dadurch gekennzeichnet,**
**daß** beidseitig auf der Trägerbahn (11) eine mindestens abschnittsweise in eine wasserundurchlässige Polymerschicht (14a, 14b) umgeformte polymere Faserstruktur (12) vorgesehen ist.

5. Transferband nach einem der vorangehenden Ansprüche,
**gekennzeichnet durch**
eine, insbesondere in Bandlängsrichtung, genahtete Ausführung als Nahtfilz-Gewebe.

6. Transferband nach einem der vorangehenden Ansprüche,
**dadurch gekennzeichnet,**
**daß** die polymere Faserstruktur (12; 22; 32) durch Fasern gebildet ist, deren Anteil an thermoplastisch verformbaren bzw. schmelz-klebenden Fasern mindestens 10 % beträgt und insbesondere im Bereich zwischen 25 und 100 % liegt.

7. Transferband nach einem der vorangehenden Ansprüche,
**dadurch gekennzeichnet,**
**daß** die polymere Faserstruktur (12; 22; 32) eine Mischung hydrophiler und hydrophober Komponenten aufweist.

8. Transferband nach einem der vorangehenden Ansprüche,
**dadurch gekennzeichnet,**
**daß** die Dicke der Polymerschicht (14; 14a, 14b; 24; 34) bzw. die Dicke beider Polymerschichten zusammen im Bereich zwischen 20 und 90%, bevorzugt im Bereich zwischen 60 und 90%, der Gesamtdicke des Transferbandes (10; 10'; 20; 30) liegt.

9. Transferband nach einem der vorangehenden Ansprüche,
**dadurch gekennzeichnet,**
**daß** die Polymerschicht (34) durch eingeschmolzene Längsund/oder Querfäden (36) zusätzlich verstärkt ist.

10. Transferband nach einem der vorangehenden Ansprüche,
**dadurch gekennzeichnet,**
**daß** die mittlere Dicke der faserigen Oberflächenschicht (15; 25; 35) im Bereich zwischen 1 und 10 % der Gesamtdicke des Transferbandes (10; 20; 30) liegt.

11. Transferband nach einem der vorangehenden Ansprüche,
**dadurch gekennzeichnet,**
**daß** die faserige Oberflächenschicht (15; 25; 35) im wesentlichen aus abriebfesten und insbesondere hochtemperaturbeständigen Fasern gebildet ist, deren Schmelzpunkt insbesondere um 50°C bis 100°C höher liegt, als der Schmelzpunkt der die Polymerschicht bildenden Fasern oder die nicht schmelzbar sind.

12. Transferband nach Anspruch 11,
**dadurch gekennzeichnet,**
**daß** die faserige Oberflächenschicht (15; 25; 35) Polyester-, Polyamid-, Polycarbonat-, PAC-, Aramid-, Teflon- oder Kohlefasern aufweist.

13. Transferband nach einem der vorangehenden Ansprüche,
**dadurch gekennzeichnet,**
**daß** die Polymerschicht niedrig schmelzende Polyolefine, Polyamide, Polyester, Polyacrylate oder Polyvinyle aufweist.

14. Transferband nach einem der vorangehenden Ansprüche,
**dadurch gekennzeichnet,**
**daß** die Polymerschicht bei Temperaturen im Bereich zwischen 100°C und 220°C, vorzugsweise zwischen 120°C und 150°C, und insbesondere unter Anwendung eines spezifischen Druckes im Bereich zwischen 4,9 bar [5 kg/cm²] und 68,6 bar [70 kg/cm²] gebildet ist.

15. Transferband nach einem der vorangehenden Ansprüche,
**dadurch gekennzeichnet,**
**daß** die Trägerbahn Monofile mit einer Drahtstärke im Bereich zwischen 0,1 und 0,3 mm, die wahlweise mehrfach verzwirnt sind, Filamentzwirne oder Mischzwirne aus Monofilen und Multifilamenten aufweist.

16. Transferband nach einem.der Ansprüche 5-15,
**dadurch gekennzeichnet,**
**daß** die genahtete Trägerbahn Monofile mit einer Drahtstärke im Bereich zwischen 0,3 und 0,8 mm aufweist.

17. Naßpresse (100) mit verlängertem Pressenspalt (106) zur Trocknung einer Papierbahn (101),
**gekennzeichnet durch**
ein Transferband (10; 20; 30; 105) nach einem der vorangehenden Ansprüche.

## Claims

1. Transfer belt (10; 10'; 20; 30) of a wet press (100) especially having an extended press nip (106) for drying a paper web (101), having
- an, especially woven or knitted, carrier web (11; 21; 31),
- a meltable-fibre-comprising, substantially polymeric fibre structure (12; 22; 32) needled, similarly to a felt, onto the carrier web, which fibre structure has been converted into a polymer layer (14; 14a, 14b; 24; 34) by thermo-mechanical means,
**characterised in that**
- arranged on the polymer layer is a fibrous surface layer (15; 25; 35) having a felt-like or fibre-structured texture, especially of needled-on, non-melting and non-adhering fibres, and
- the polymer layer (14; 14a, 14b; 24; 34) has a water permeability in the range from 0 to 50 l/(dm² x min) under a pressure as prevails in the press nip.

2. Transfer belt according to claim 1,
**characterised in that**
the carrier web (21) has a multi-layer or laminated structure.

3. Transfer belt according to claim 1 or 2,
**characterised in that**,
on that side of the carrier web (11; 21) which is remote from the polymer layer (14; 24), there is provided a fleece layer (15; 25).

4. Transfer belt according to claim 1 or 2,
**characterised in that**
on both sides of the carrier web (11) there is provided a polymeric fibre structure (12) converted at least in regions into a polymer layer (14a, 14b), the polymer layer (14a, 14b) having a water permeability in the range from 0 to 50 I/(dm² x min) under a pressure as prevails in the press nip.

5. Transfer belt according to one of the preceding claims,
**characterised by**
a seamed arrangement, especially seamed in the longitudinal direction of the web, in the form of a seamed felt fabric.

6. Transfer belt according to one of the preceding claims,
**characterised in that**
the polymeric fibre structure (12; 22; 32) is formed by fibres whose content of thermoplastically deformable and/or melt-adhering fibres is at least 10 % and especially is in the range between 25 and 100 %.

7. Transfer belt according to one of the preceding claims,
**characterised in that**
the polymeric fibre structure (12; 22; 32) has a mixture of hydrophilic and hydrophobic components.

8. Transfer belt according to one of the preceding claims,
**characterised in that**
the thickness of the polymer layer (14; 14a, 14b; 24; 34) or the thickness of the two polymer layers together is in the range between 20 and 90 %, preferably in the range between 60 and 90 %, of the overall thickness of the transfer belt (10; 10'; 20; 30).

9. Transfer belt according to one of the preceding claims,
**characterised in that**
the polymer layer (34) is additionally reinforced by melted-in longitudinal and/or transverse threads (36).

10. Transfer belt according to one of the preceding claims,
**characterised in that**
the average thickness of the fibrous surface layer (15; 25; 35) is in the range between 1 and 10 % of the overall thickness of the transfer belt (10; 20; 30).

11. Transfer belt according to one of the preceding claims,
**characterised in that**
the fibrous surface layer (15; 25; 35) is substantially formed from abrasion-resistant and especially high-temperature-resistant fibres whose melting point especially is 50°C to 100°C higher than the melting point of the fibres forming the polymer layer, or which are not meltable.

12. Transfer belt according to claim 11,
**characterised in that**
the fibrous surface layer (15; 25; 35) comprises polyester, polyamide, polycarbonate, PAC, aramid, Teflon or carbon fibres.

13. Transfer belt according to one of the preceding claims,
**characterised in that**
the polymer layer comprises low-melting polyolefins, polyamides, polyesters, polyacrylates or polyvinyls.

14. Transfer belt according to one of the preceding claims,
**characterised in that**
the polymer layer is formed at temperatures in the range between 100°C and 220°C, preferably between 120°C and 150°C, and especially using a specific pressure in the range between 4.9 bar [5 kg/cm²] and 68.6 bar [70 kg/cm²].

15. Transfer belt according to one of the preceding claims,
**characterised in that**
the carrier web comprises monofils having a thickness in the range between 0.1 and 0.3 mm, which optionally are multiply twisted, or comprises filament twists or mixed twists of monofils and multifilaments.

16. Transfer belt according to one of claims 5-15,
**characterised in that**
the seamed carrier web comprises monofils having a thickness in the range between 0.3 and 0.8 mm.

17. Wet press (100) having an extended press nip (106) for drying a paper web (101),
**characterised by**
a transfer belt (10; 20; 30; 105) according to one of the preceding claims.

## Revendications

1. Bande de transfert (10; 10' ; 20; 30) d'une presse humide (100), en particulier avec une fente de pression (106) rallongée pour le séchage d'une bande de papier (101), comprenant
- une bande de support (11 ; 21 ; 31), en particulier tissée ou maillée,
- une structure de fibres (12 ; 22 ; 32) sensiblement polymère, qui comporte des fibres thermofusibles aiguilletées selon un aspect feutré sur la bande de support et qui est transformée par un moyen thermo-mécanique en une couche polymère (14 ; 14a, 14b ; 24 ; 34),
**caractérisée en ce que**
- sur la couche polymère est agencée une couche superficielle (15 ; 25 ; 36) fibreuse avec une texture à aspect feutré ou structurée par des fibres, formée en particulier par des fibres aiguilletées, non thermofusibles et non adhésives et
- la couche polymère (14 ; 14a, 14b ; 24; 34) présente une perméabilité à l'eau dans le domaine de 0 à 50 l/(dm² x min) sous une pression, telle qu'elle règne dans la fente de pression.

2. Bande de transfert selon la revendication 1, **caractérisée en ce que** la bande de support (21) possède une structure multicouche ou stratifiée.

3. Bande de transfert selon la revendication 1 ou 2, **caractérisée en ce qu'**une couche de non-tissé (15 ; 25) est prévue sur le côté de la bande de support (11 ; 21) opposé à la couche polymère (14 ; 24).

4. Bande de transfert selon la revendication 1 ou 2, **caractérisée en ce que**, sur les deux faces de la bande de support (11), il est prévu une structure de fibres (12) polymère transformée, au moins par tronçons, en une couche polymère (14a, 14b), la couche polymère (14a, 14b) présentant une perméabilité à l'eau dans le domaine de 0 à 50 l/(dm² x min) sous une pression, telle qu'elle règne dans la fente de pression.

5. Bande de transfert selon l'une quelconque des revendications précédentes, **caractérisée par** une conception à piqùres, en particulier dans le sens longitudinal de la bande, sous forme de feutre tissé piqué.

6. Bande de transfert selon l'une quelconque des revendications précédentes, **caractérisée en ce que** la structure de fibres (12 ; 22; 32) polymère est formée par des fibres, dont la proportion en fibres déformables par voie thermoplastique ou thermocollantes est de 10 % au moins et en particulier se situe dans le domaine entre 25 et 100 %.

7. Bande de transfert selon l'une quelconque des revendications précédentes, **caractérisée en ce que** la structure de fibres (12 ; 22 ; 32) polymère comporte un mélange de composants hydrophiles et hydrophobes.

8. Bande de transfert selon l'une quelconque des revendications précédentes, **caractérisée en ce que** l'épaisseur de la couche polymère (14 ; 14a, 14b ; 24; 34), plus précisément l'épaisseur des deux couches polymères conjointes, se situe dans le domaine entre 20 et 90 %, de préférence dans le domaine entre 60 et 90 % de l'épaisseur totale de la bande de transfert (10 ; 10' ; 20 ; 30).

9. Bande de transfert selon l'une quelconque des revendications précédentes, **caractérisée en ce que** la couche polymère (34) est renforcée en plus par des fils longitudinaux et/ou des fils transversaux (36) scellés dans ladite couche.

10. Bande de transfert selon l'une quelconque des revendications précédentes, **caractérisée en ce que** l'épaisseur moyenne de la couche superficielle fibreuse (15 ; 25 ; 35) se situe dans le domaine entre 1 et 10 % de l'épaisseur totale de la bande de transfert (10 ; 20 ; 30).

11. Bande de transfert selon l'une quelconque des revendications précédentes, **caractérisée en ce que** la couche superficielle fibreuse (15 ; 25 ; 35) est formée sensiblement par des fibres résistantes à l'usure et, en particulier, résistantes aux températures élevées, dont le point de fusion est en particulier de 50°C à 100°C supérieur au point de fusion des fibres formant la couche polymère ou qui ne sont pas thermofusibles.

12. Bande de transfert selon la revendication 11, **caractérisée en ce que** la couche superficielle fibreuse (15; 25; 35) comporte des fibres polyesters, polyamides, polycarbonates, polyacrylnitriles, aramides, téflon ou carbones.

13. Bande de transfert selon l'une quelconque des revendications précédentes, **caractérisée en ce que** la couche polymère comporte des polyoléfines, polyamides, polyesters, polyacrylates ou polyvinyles à bas point de fusion,

14. Bande de transfert selon l'une quelconque des revendications précédentes, **caractérisée en ce que** la couche polymère est réalisée sous des températures dans le domaine entre 100°C et 220°C, de préférence entre 120°C et 150°C, et en particulier avec l'application d'une pression spécifique dans le domaine entre 4,9 bar (5 kg/cm²) et 68,6 bar (70 kg/cm²).

15. Bande de transfert selon l'une quelconque des revendications précédentes, **caractérisée en ce que** la bande de support comporte des monofilaments avec une épaisseur du fil dans le domaine entre 0,1 et 0,3 mm et avec, au choix, de multiples torsions, des fils retors continus ou des fils retors mélangés, formés par des monofilaments et des multifilaments.

16. Bande de transfert selon l'une quelconque des revendications 5 à 15, **caractérisée en ce que** la bande de support à piqûres comporte des monofilaments avec une épaisseur du fil dans le domaine entre 0,3 et 0,8 mm.

17. Presse humide (100) avec une fente de pression (106) rallongée, destinée au séchage d'une bande de papier (101), **caractérisée par** une bande de transfert (10 ; 20 ; 30 ; 105) selon l'une quelconque des revendications précédentes.
